# EUROPÄISCHE PATENTANMELDUNG

(11) **EP 1 298 696 A2**
(43) Veröffentlichungstag der Anmeldung: **02.04.2003**
(21) Anmeldenummer: 02018799.3
(22) Anmeldetag: 22.08.2002
(51) Int. Cl.: H01J 9/22, H01J 61/72

(54) **Verfahren zur Trocknung von Beschichtungen auf Substraten für Lampen**

(30) Priorität: 28.09.2001 DE 10147952
(71) Anmelder: Patent-Treuhand-Gesellschaft für elektrische Glühlampen mbH, 81543 München (DE)
(72) Erfinder: Konrad, Armin, Dr., 86830 Schwabmuenchen (DE); Zachau, Martin, Dr., 82269 Geltendorf (DE)

(57) **Zusammenfassung**

Die Erfindung betrifft ein Verfahren zur Trocknung von nassen oder feuchten Beschichtungen auf Substraten für Lampen, bei der mindstens 25 %, vorteilhaft mehr als 50 %, der zur Trocknung der Beschichtungen zugeführten elektromagnetischen Energie eines Temperaturstrahlers im Wellenlängenbereich zwischen 0,7 und 1,5 µm liegt. Als Temperaturstrahler zur Erzeugung der elektromagnetischen Strahlung werden rohrförmige Strahler (5) verwendet.

## Beschreibung

### Technisches Gebiet

Die Erfindung geht aus von einem Verfahren zur Trocknung von nassen oder feuchten Beschichtungen auf Substraten für Lampen gemäß dem Oberbegriff des Anspruchs 1. Es handelt sich dabei insbesondere um eine Trocknung mit Hilfe elektromagnetischer Strahlung eines Temperaturstrahlers. Die Substrate können dabei röhrenförmige gerade Entladungsgefäße für Leuchtstofflampen, ein- oder mehrfach gebogene röhrenförmige Entladungsgefäße für kompakte Niederdruckentladungslampen oder auch plattenförmige Entladungsgefäße für Entladungslampen, die mit dielektrisch behinderter Entladung betrieben werden, sein. Gleichwohl eignet sich das Verfahren aber auch für Hüllkolben für kompakte Niederdruckentladungslampen oder Kolben für Glühlampen.

### Stand der Technik

Die Trocknung von mit organischen oder wässrigen Suspensionen beschlämmten Glasrohren für Lampen erfolgt heutzutage entweder mit 20 bis 150 °C warmer Blasluft oder mit Infrarotstrahlung im Wellenlängenbereich über 2 µm.

Im ersten Fall wird der Glaskolben durch ein aus Luft bestehendes Wärmebad geführt und gleichzeitig warme Luft durch das Kolbeninnere geblasen.

Dabei treten die Oberflächen mit dem Wärmebad in Kontakt, so dass zunächst die Glasoberfläche und die Flüssigkeitsoberfläche erwärmt werden. Die Oberflächen haben zunächst eine höhere Temperatur als das Volumen, welches nicht in unmittelbarem Kontakt mit der warmen Luft ist. Über Wärmeleitung des Glases und der Flüssigkeit kann sich dieser Temperaturunterschied allmählich ausgleichen, sofern dieser Prozess genügend schnell erfolgt. Andererseits treten Beschichtungsfehler auf.

Einerseits führt eine zu starke oder zu heiße Blasluft an der Flüssigkeitsoberfläche zur Bildung einer Haut, die dann im weiteren Trocknungsprozess aufreißt und eine rissige Schicht zurücklässt. Andererseits führt eine zu hohe Temperatur des Wärmebades zu einer starken Erwärmung der Glasoberfläche, so dass in der Beschlämmung wegen ungenügender Wärmeleitung kein ausreichender Temperaturausgleich erfolgt, die Beschlämmung dann zu sieden beginnt und fehlerhaft wird.

Im zweiten Fall wird der Glaskolben von außen mit IR-Strahlung beheizt. Die Wellenlänge ist dabei derart gewählt, dass die Strahlungsenergie überwiegend bis vollständig im Glas absorbiert wird. Wird die Strahlungsintensität zu stark erhöht, so treten Beschichtungsfehler in Form von Rissen und Blasen auf, analog einem Wärmebad mit zu hoher Temperatur.

In jedem Fall ist nur eine begrenzte Energieeinkopplung möglich und eine Untergrenze von ca. 2 Minuten für die Trockenzeit von geraden rohrförmigen Leuchtstofflampenkolben mit einem Durchmesser von 26 mm und einer Länge von 1500 mm gegeben. Die heute technisch realisierten Zeiten liegen bei 8 bis 10 Minuten. Analoges gilt für andere Geometrien und Lampentypen.

### Darstellung der Erfindung

Es ist Aufgabe der vorliegenden Erfindung, ein verbessertes Verfahren zur Trocknung von nassen oder feuchten Beschichtungen auf Substraten für Lampen bereitzustellen.

Diese Aufgabe wird bei dem Verfahren mit den Merkmalen des Oberbegriffs des Anspruchs 1 durch die Merkmale des kennzeichnenden Teils des Anspruchs 1 gelöst. Besonders vorteilhafte Ausgestaltungen finden sich in den abhängigen Ansprüchen.

Nahe Infrarot-Strahlung (NIR-Strahlung) wird durch eine Schwarzkörperstrahlung mit einer Oberflächentemperatur von 2000 bis 3700 Kelvin, entsprechend einem Emissionsmaximum von 1,5 bis 0,78 µm Wellenlänge beschrieben. NIR-Strahlung wird im Vergleich zur IR-Strahlung durch eine höhere Oberflächentemperatur der Strahlungsquelle erzeugt. Im NIR-Strahlungsbereich hat Wasser schwache Absorptionsbanden bei 0,9, 1,2 und 1,4 µm, das Glas, im Vergleich zum IR-Bereich (λ> 2,0 µm), kein oder nur ein schwaches Absorptionsvermögen. Die NIR-Strahlung wird also von Glas nicht oder nur schwach absorbiert, so dass der Großteil transmittiert wird. Dadurch ist es möglich das Wasser in einer nassen oder feuchten Beschichtung auf einem Glas direkt, ohne den Zwischenschritt über die Wärmeleitung des Glases zu erwärmen. Da außerdem im NIR-Bereich die Absorption durch Wasser vergleichsweise schwach ist, wird in diesem Fall die Beschichtung sehr homogen und gleichmäßig erwärmt. Eine Blasenbildung während des Trocknens wird vermieden und eine Wärmeleitung in der Beschichtung überflüssig.

Dadurch, dass die Strahlungsleistung gemäß Stefan-Boltzmann Gesetz mit der 4. Potenz der Oberflächentemperatur des Strahlers steigt, hat man bei einer höheren Oberflächentemperatur auch noch eine deutlich höhere Strahlungsleistung zur Verfügung. Durch die Kombination aus direkter Erwärmung der zu trocknenden Beschichtung und höherer Strahlungsleistung ist eine deutliche Verkürzung der Trockenzeit zu erreichen. Der Anteil der im NIR-Bereich liegenden elektromagnetischen Strahlung zur Trocknung von nassen oder feuchten Beschichtungen auf Substraten sollte dabei mindestens 25 %, vorteilhaft mehr als 50 % betragen.

Die Beschichtungen können aus Lösungen und/oder Lacken und /oder Suspensionen mit Feststoffen wie z. B. Leuchtstoffen bestehen. Die Substrate bestehen bevorzugt aus Glas oder Kunststoff mit ähnlichen strahlungsoptischen Eigenschaften wie Glas.

Da das Verfahren die Einkopplung der Strahlung in den Beschichtungs-Substrat-Verbund von der Seite des Entladungsgefäßes aus ermöglicht, wird das Trocknungsverfahren erheblich vereinfacht.

Bevorzugt werden als Temperaturstrahler zur Erzeugung der elektromagnetischen Strahlung rohrförmige Strahler verwendet, wobei die Substrate beim Trocknungsverfahren relativ zur Anordnung der rohrförmigen Strahler bewegt werden.

Um eine möglichst gleichmäßige Trocknung zu erzielen, sollten die rohrförmigen Strahler in einer Ebene parallel zu der durch die Achse der Substrate und die Transportrichtung der Substrate aufgespannten Ebene angeordnet sind.

Vorteilhaft sind auf der von den Substraten abgewandten Seite der rohrförmigen Strahler Reflektoren für die elektromagnetischen Strahlung angeordnet, die elektromagnetische Strahlung in Richtung der Substrate lenken. Außerdem sollten zusätzlich auf der von den rohrförmigen Strahlern abgewandten Seite der Substrate ebensolche Reflektoren angeordnet sein, um elektromagnetische Strahlung in Richtung der Substrate zu lenken. Dadurch lassen sich Energieeinsparungen um bis zu 50% im Vergleich zu anderen Verfahren im wesentlichen durch zwei Eigenschaften erzielen. Zum einen kann die NIR-Strahlung durch die Reflektoren auf den zu beheizenden Bereich fokussiert und zum anderen können Streulicht bzw. nicht absorbierte Strahlung gezielt wieder verwendet werden Eine übermäßige Erwärmung des Glaskolbens ist dabei nicht gegeben, da die Absorption der NIR-Strahlung hauptsächlich durch das zu verdampfende Wasser erfolgt.

Die rohrförmigen Strahler sind vorteilhaft mit Ihrer Achse in einem Winkel zwischen 0° und 90° zur Transportrichtung der Substrate angeordnet. Sie können zusätzlich während des Trocknungsvorgangs senkrecht zur Transportrichtung der Substrate in der von den Strahlern aufgespannten Ebene bewegt werden. Dadurch kann die Zahl der für den Trockenvorgang erforderlichen Strahler reduziert werden.

Die Erfindung betrifft weiterhin ein Verfahren zur Herstellung einer rohrförmigen Leuchtstofflampe mit einer Beschichtung sowie eine Leuchtstofflampe mit einer Beschichtung auf der Innenseite des rohrförmigen Entladungsgefäßes, bei der die Trocknung der Leuchtstoffbeschichtung nach dem vorgenannten Verfahren erfolgt.

### Beschreibung der Zeichnungen

Im folgenden soll die Erfindung anhand eines Ausführungsbeispiels näher erläutert werden. Es zeigen:
- Figur 1: eine schematische Seitenansicht des Trocknungsverfahrens bei linearen Leuchtstofflampen mit Hilfe von rohrförmigen NIR-Strahlern
- Figur 2: eine schematische Draufsicht des Verfahren gemäß Figur 1 in vergrößertem Maßstab mit zusätzlichen Reflektoren

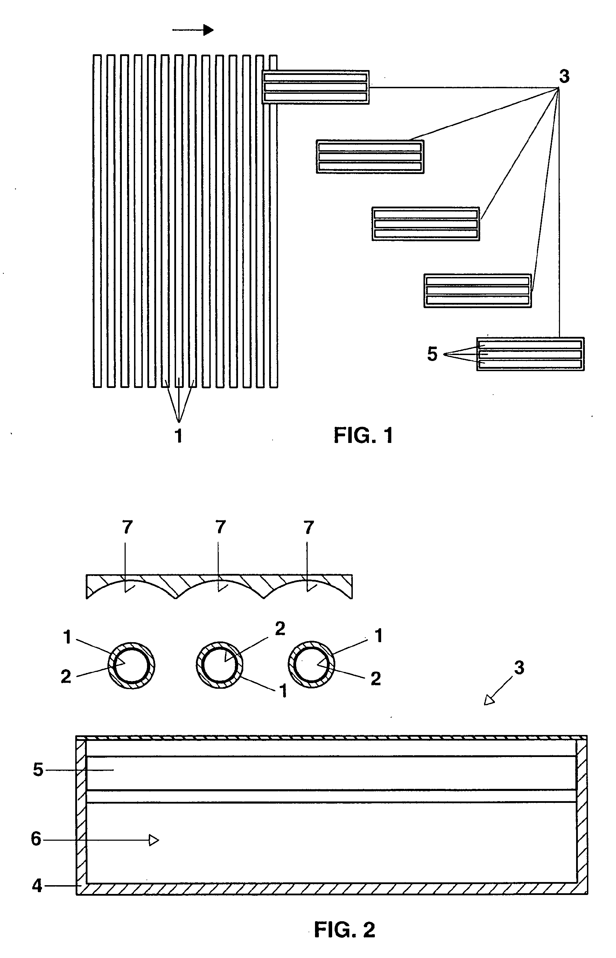

In Figur 1 und 2 ist ein erfindungsgemäßes Trocknungsverfahren zum Trocknen einer Leuchtstoffbeschichtung 2 bei rohrförmigen Entladungskolben 1 für Leuchtstofflampen dargestellt. Die Leuchtstoffbeschichtung 2 ist hierbei innen auf dem rohrförmigen Entladungskolben 1 aus Glas aufgebracht und besteht aus einer wässrigen Suspension mit Feststoffen.

Die Entladungskolben 1 sind senkrecht angeordnet und werden bei dem Trocknungsvorgang in Pfeilrichtung an den waagrecht angeordneten NIR-Strahlungsvorrichtungen 3 vorbeigeführt.

Die NIR-Strahlungsvorrichtungen 3 bestehen aus einem Gehäuse 4 mit Abdeckscheibe, in das jeweils drei rohrförmige NIR-Strahler 5 mit Reflektoren 6 zur Fokussierung der NIR-Strahlung auf die Entladungskolben 1 eingebaut sind. Zur zeitlich aufeinanderfolgenden Trocknung der Beschichtung längs der Achse der Entladungskolben weist die Trocknungsanlage fünf NIR-Strahlungsvorrichtungen 3 auf, die entlang der Transportrichtung der Entladungskolben 1 versetzt angeordnet sind.

Wie in Figur 2 gezeigt, sind auf der gegenüberliegenden Seite der Entladungskolben 1 zusätzliche Reflektoren 6 zur Fokusierung von Streulicht und nicht absorbierter Strahlung auf die Leuchtstoffbeschichtung 2 vorgesehen (In Figur 1 wurden diese Reflektoren aus Übersichtlichkeitsgründen weggelassen).

Mit dem hier dargestellten Trocknungsverfahren ist eine Verkürzung der Trocknungszeit für eine Leuchtstoffbeschichtung bei Leuchtstofflampenkolben mit einem Durchmesser von 26 mm und einer Länge von 1500 mm auf ca. 10 Sekunden möglich. Folglich lassen sich deutlich kleinere Trocknungsanlagen realisieren. Mit Verwendung von naher Infrarotstrahlung lässt sich die Trockenzeit im Vergleich zu konventioneller IR-Strahlung um das fünfbis zehnfache verkürzen. Gleichzeitig sinkt der Energiebedarf um ca. die Hälfte.

## Patentansprüche

1. Verfahren zur Trocknung von nassen oder feuchten Beschichtungen auf Substraten für Lampen, wobei die für die Trocknung der Beschichtungen benötigte Energie in Form elektromagnetischer Strahlung eines Temperaturstrahlers zugeführt wird, **dadurch gekennzeichnet, dass** mindestens 25 % der vom Temperaturstrahler zugeführten elektromagnetischen Strahlung im Wellenlängenbereich zwischen 0,7 und 1,5 µm liegt.

2. Verfahren nach Anspruch 1, **dadurch gekennzeichnet, dass** mehr als 50 % der zugeführten elektromagnetischen Strahlung im Wellenlängenbereich zwischen 0,7 und 1,5 µm liegt.

3. Verfahren nach Anspruch 1, **dadurch gekennzeichnet, dass** die Beschichtungen aus Lösungen und/oder Lacken und/oder Suspensionen mit Feststoffen bestehen.

4. Verfahren nach Anspruch 1 und 3, **dadurch gekennzeichnet, dass** die in den Suspensionen enthaltenen Feststoffe Leuchtstoffe sind.

5. Verfahren nach Anspruch 1, **dadurch gekennzeichnet, dass** die Substrate aus Glas bestehen.

6. Verfahren nach Anspruch 1, **dadurch gekennzeichnet, dass** die Substrate aus Kunststoff sind.

7. Verfahren nach Anspruch 1, **dadurch gekennzeichnet, dass** die Einkopplung der Strahlung in den Beschichtungs-Substrat-Verbund von der Seite des Substrats erfolgt.

8. Verfahren nach Anspruch 1, **dadurch gekennzeichnet, dass** die Substrate aus rohrförmigen Kolben (1) bestehen.

9. Verfahren nach Anspruch 8, **dadurch gekennzeichnet, dass** die rohrförmigen Kolben (1) geradlinig verlaufen.

10. Verfahren nach Anspruch 8, **dadurch gekennzeichnet, dass** die rohrförmigen Kolben ein- oder mehrfach gebogen sind.

11. Verfahren nach Anspruch 1, **dadurch gekennzeichnet, dass** die Temperaturstrahler zur Erzeugung der elektromagnetischen Strahlung rohrförmige Strahler (5) sind.

12. Verfahren nach Anspruch 11, **dadurch gekennzeichnet, dass** die Substrate bei dem Trocknungsverfahren relativ zur Anordnung der rohrförmigen Strahler (5) bewegt werden.

13. Verfahren nach Anspruch 11, **dadurch gekennzeichnet, dass** die rohrförmigen Strahler (5) in einer Ebene parallel zu der durch die Achse der Substrate sowie die Transportrichtung der Substrate aufgespannten Ebene angeordnet sind.

14. Verfahren nach Anspruch 11, **dadurch gekennzeichnet, dass** auf der von den Substraten abgewandten Seite der rohrförmigen Strahler (5) Reflektoren (6) für die elektromagnetische Strahlung angeordnet sind, die elektromagnetischen Strahlung in Richtung der Substrate lenken.

15. Verfahren nach Anspruch 11, **dadurch gekennzeichnet, dass** auf der von den rohrförmigen Strahlern (5) abgewandten Seite der Substrate Reflektoren (7) für die elektromagnetische Strahlung angeordnet sind, die elektromagnetischen Strahlung in Richtung der Substrate lenken.

16. Verfahren nach Anspruch 11, **dadurch gekennzeichnet, dass** die rohrförmigen Strahler (5) mit Ihrer Achse in einem Winkel zwischen 0° und 90° zur Transportrichtung der Substrate angeordnet sind.

17. Verfahren nach Anspruch 11, **dadurch gekennzeichnet, dass** die rohrförmigen Strahler während des Trocknungsvorgangs senkrecht zur Transportrichtung der Substrate in der von den Strahlern aufgespannten Ebene bewegt werden.

18. Verfahren nach Anspruch 8, **dadurch gekennzeichnet, dass** die rohrförmigen Kolben (1) Rohre für Leuchtstofflampen sind.

19. Verfahren zur Herstellung einer rohrförmigen Leuchtstofflampe mit einer Beschichtung, **dadurch gekennzeichnet, dass** die Trocknung der Leuchtstoffbeschichtung nach dem Verfahren gemäß einem oder mehreren der Ansprüche 1 bis 18 erfolgt.

20. Leuchtstofflampe mit einer Beschichtung auf der Innenseite des rohrförmigen Entladungsgefäßes, **dadurch gekennzeichnet, dass** die Trocknung der Beschichtung nach dem Verfahren gemäß einem oder mehreren der Ansprüche 1 bis 18 erfolgt.
